(19)

**Europäisches Patentamt**

**European Patent Office**

**Office européen des brevets**

(11) **EP 4 589 274 A1**

(12) **EUROPEAN PATENT APPLICATION**

(43) Date of publication:
23.07.2025 Bulletin 2025/30

(21) Application number: 24152300.0

(22) Date of filing: 17.01.2024

(51) International Patent Classification (IPC):
*G01L 5/16* (2020.01) *A63B 69/16* (2006.01)
*G01L 5/22* (2006.01)

(52) Cooperative Patent Classification (CPC):
**G01L 5/16; A63B 21/4035; A63B 22/0605;**
**A63B 24/0062; A63B 71/0622; G01L 5/223;**
A63B 69/16; A63B 2022/0082; A63B 2024/0065;
A63B 2071/0652; A63B 2220/13; A63B 2220/51;
A63B 2220/52; A63B 2220/54; A63B 2220/833;
(Cont.)

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: **Universiteit Antwerpen**
**2000 Antwerpen (BE)**

(72) Inventors:
• **Van Campenhout, Lukas**
**2000 Antwerpen (BE)**
• **Van Gastel, Alexander**
**2000 Antwerpen (BE)**
• **Heirbaut, Sien**
**2000 Antwerpen (BE)**

(74) Representative: **IP HILLS NV**
**Bellevue 5/501**
**9050 Gent-Ledeberg (BE)**

(54) **FORCE MEASURING DEVICE**

(57)     Force measuring device for measuring a force
magnitude and a force direction applied to at least one
body, wherein the force measuring device comprises a
static portion including a connecting element configured
to be connected to said at least one body; a dynamic
portion; and at least two sensors configured to measure a
tractive force and a pressure force or at least four sensors
configured to measure one of a tractive force and a
pressure force, each of said sensors being positioned
between said static portion and said dynamic portion at a
radial distance of said connecting element.

Fig. 4

EP 4 589 274 A1

(52) Cooperative Patent Classification (CPC): (Cont.)
A63B 2225/50

## Description

### Field of the Invention

The present invention generally relates to a force measuring device for measuring a force magnitude and a force direction applied to at least one body.

### Background of the Invention

In sports medicine, it is known to evaluate performance of an athlete by measuring forces exerted by the athlete on a sporting device, such as on pedals of a bicycle, on an oar of a rowing boat, on a fitness training device, or on any other device. After an injury and during rehabilitation, force measurements may be useful to point out poor or unsatisfactory recovery. Lack of recovery may lead to further injuries, for example due to overcompensation by other previously uninjured body parts, which may be detected by unequal force distribution during an effort.

Also in other technical domains, knowledge of applied force may be desirable, for example, to test resistance of materials and/or structures, to verify bending or deflection properties, to improve functionality or monitor performance data of robots or in weighing applications.

Force sensing devices are known. These devices are generally configured to detect a position where a force is exerted or applied and to measure a magnitude of the applied force. A load cell is an example of a force sensing device. It is a transducer converting a force applied to the device into an electric output which is proportional to the magnitude of the applied force. The force sensing device may be based on strain gauges, on piezoelectric sensors or on other known principles, such as hydraulic or pneumatic principles.

A problem associated with said known force sensing devices is that they only provide a measurement of a point of application of a component of a force and a force magnitude, but not a direction into which the force is applied. To obviate this disadvantage, a plurality of force sensors can be used, for example positioned in a crossbeam structure. However, such structures may still lack accuracy with respect to the provided force measurements. Moreover, these structures can generally be relatively complicated, both mechanically, as with respect to an interpretation and transformation of measurement data into the desired force direction.

### Summary of the Invention

It is therefore an aim of the present invention to solve or at least alleviate one or more of the above-mentioned problems. In particular, the invention aims at providing a force measuring device allowing relatively accurate measurements of a force magnitude and a force direction applied to a body, in particular forces exerted by a human on said body.

To this aim, according to a first aspect of the invention, there is provided a force measuring device having the features of claim 1. In particular, the force measuring device is configured to measure a force magnitude as well as a force direction applied to at least one body. The force measuring device comprises a static portion and a dynamic portion. The static portion includes a connecting element configured to be connected to said at least one body. The force measuring device further comprises at least two sensors configured to measure both a tractive force and a pressure force, or, alternatively, the force measuring device comprises at least four sensors configured to measure only one of a tractive force and a pressure force. Each of said at least two or at least four sensors is positioned between said static portion and said dynamic portion at a radial distance of said connecting element. The sensors are operatively connected to the static portion and to the dynamic portion to transfer a force exerted on the body to at least one of the sensors. If the sensors are pressure sensors, the sensors can preferably be attached to one of the static portion and the dynamic portion, more preferably to the static portion, which may for example be advantageous for cable management. Alternatively, attaching the sensors to the dynamic portion may provide a relatively quick access to said sensors, for example during servicing. If the sensors are configured to measure both compressive and tensile forces, the sensors can preferably be attached to both the static and the dynamic portion. Direct contact between the sensors and the static portion and/or the dynamic portion is preferred. In an inventive way, the connecting element is configured to limit a movement of the at least one body to a rotation around a rotation point within two substantially transverse planes when the at least one body is connected to the connecting element. In other words, the connecting element is configured to limit a movement of the at least one body to two degrees of freedom. Thanks to the limitation of the movement, the movement can remain within a predefined range such that pressure and/or traction can be measured relatively easily and accurately.

The connecting element can advantageously be a universal joint, which can also be called a U-joint, a Cardan joint, a Hooke joint or a Spiker joint. A universal joint generally includes two hinges substantially transverse to each other and connected by a cross shaft to which U-shaped ends can be connected. The universal joint has the advantage that the joint by its mere shape can limit a movement to two degrees of freedom and does not allow axial rotation. Alternatively, the connecting element could for example be a ball joint, which can usually provide three degrees of freedom, but which can be limited to two degrees of freedom by adding additional limiting elements to the joint.

At least one angle between the at least two sensors configured to measure a tractive force and a pressure force is most preferably strictly smaller than 180°. In other words, if there are only two sensors each configured to measure a tractive and a pressure force, then said two sensors should preferably not be aligned on a line through the rotation point of the connecting element. If the two sensors are aligned, then a force direction applied on the connected body may be difficult to determine when the applied force is transverse to said line connecting the sensors and the rotation point.

When at least four sensors configured to measure one of a tractive force and a pressure force are used, then it is preferred that any angle of more than 180° includes at least two sensors. If this is not the case, in particular, when there is an angle of more than 180° including only one sensor, then a force direction may not always be determinable for every force impact on the connected body.

The sensors can preferably be positioned such that a sensing surface of said sensors is included in one of the two substantially transverse planes to which the connecting element is configured to limit a movement of the at least one body. In other words, the sensors are preferably positioned such that a plane defined by the sensor surface of the respective sensor includes the rotation point of the connecting element, and one of the two axes of the U-joint. This position can optimize the sensing by the sensor surface of the sensors since the force transferred to at least one of said sensors is preferably normal to said plane defined by the sensing surface of said sensors and the rotation point. Other positions of the sensors are possible as well but do not provide the same advantage.

The sensors can preferably be positioned at equal distance of the rotation point. Since measurements of more than one sensor are taken into account to derive a force magnitude and a force direction, calculations may be simplified when a distance between the rotation point of the connecting element and the sensors is substantially the same. However, different distances between sensors and the rotation point do work as well, at the price of longer computation time.

Angles between adjacent sensors can advantageously be substantially equal. In other words, a distribution of the sensors around the rotation point can preferably be substantially equal. When the device includes for example three sensors, all angles between adjacent sensors are 120°. Four sensors are preferably positioned such that there are substantially right angles between adjacent sensors. Such a positioning can also simplify calculations and reduce computation time. However, an uneven distribution of sensors can be advantageous as well in some cases, in particular when forces applied to the body are expected to come from a specific dominant direction.

The static portion can include at least two arms extending from said connecting element. Said sensors can then be positioned at an end of said respective at least two arms. Each of said at least two arms can then be configured to support a single sensor or two sensors at opposing sides of an arm. Providing a support arm can be a relatively simple construction to provide a sensor at a distance of the rotation point. Alternatively, the static portion can include a radial or circular support at a distance of the rotation point of the connecting element along which the sensors can be mounted.

More preferably, the static portion can include four arms extending from said connecting element, and an angle of substantially 90° may be included between adjacent arms of said four arms. Since the arms can each support one or two sensors, a substantially symmetrical device including four or more sensors can be provided, which can simplify calculations and reduce computation time.

The sensors can advantageously be load cells, in particular strain gauge load cells, more in particular button load cells. Load cells are well known sensors. A load cell is a transducer which converts force into a measurable electrical output. Strain gauge load cells are a type of load cell where a strain gauge assembly is positioned inside the load cell housing to convert the load acting on them into electrical signals. A weight on the load cell is measured by the voltage fluctuation caused in the strain gauge when it undergoes deformation. Strain gauge load cells, in particular button load cells, can provide a relatively reliable measurement of a force magnitude and a force direction while being relatively small and cost efficient. Alternatively, other types of sensors can be used as well.

The static portion may preferably include a shaft and two connecting elements, each of said two connecting elements positioned at opposing ends of the shaft. The force measuring device can further comprise two dynamic portions, each of said two dynamic portions being configured to be connected to opposing sides of the static portion. In this way, two bodies can be connected to the force measuring device, each to the respective connecting elements at opposing ends of the shaft, and forces applied to each of the two bodies separately can be measured by the force measuring device. In that case, it is preferred to double the number of sensors such that half of the sensors are positioned between the static portion and the first dynamic portion, and the other half of the sensors are positioned between the static portion and the second dynamic portion. Alternatively, the static portion may include a plate-like element, the two connecting elements being positioned on opposing surfaces of said plate-like element.

The force measuring device can preferably be substantially symmetric with respect to a plane transverse to the shaft. When two bodies are connected to the respective connecting elements at opposing sides of a substantially symmetric device, measurements of forces applied to the two bodies can be compared relatively easily. This can be particularly advantageous in for example rehabilitation to compare forces applied to the bodies by a left part and a right part of the human body. Unequal force application to the two bodies attached to the substantially symmetric force measuring device can point to a lack of recovery.

The device can further comprise at least one set screw configured to adjust a position of the sensors. More preferably, the device can comprise one set screw per sensor. The set screw can allow to apply a preload on the sensor to compensate play between the static portion and the dynamic portion and/or in the shaft if the static portion comprises a shaft. The set screw can also allow to define and/or adjust the preload on the sensor, in particular on the load cell.

According to a second aspect of the invention, there is provided a bicycle handlebar assembly, in particular for a stationary bicycle trainer, having the features of claims 13 - 14. Such an assembly can provide one or more of the above-mentioned advantages.

**Brief Description of the Drawings**

Fig. 1a and 1b show a schematic cross-sectional view of a preferred embodiment of a force measuring device according to an aspect of the invention;

Fig. 2a, 2b and 2c shows a schematic cross-sectional view on alternative embodiments of a force measuring device according to an aspect of the invention;

Fig. 3a, 3b, 3c and 3d show a schematic view of potential positions of the sensors with respect to the rotation point of the force measuring device;

Fig. 4 shows a perspective view on a preferred embodiment of a bicycle handlebar assembly according to a further aspect of the invention;

Fig. 5 shows a cross-sectional top view on the bicycle handlebar assembly of Figure 4;

Fig. 6 shows an exploded view of the force measuring device of the bicycle handlebar assembly of Figure 4;

Fig. 7a and 7b show two schematic cross-sectional views of the force measuring device of Figure 6.

**Detailed Description of Embodiment(s)**

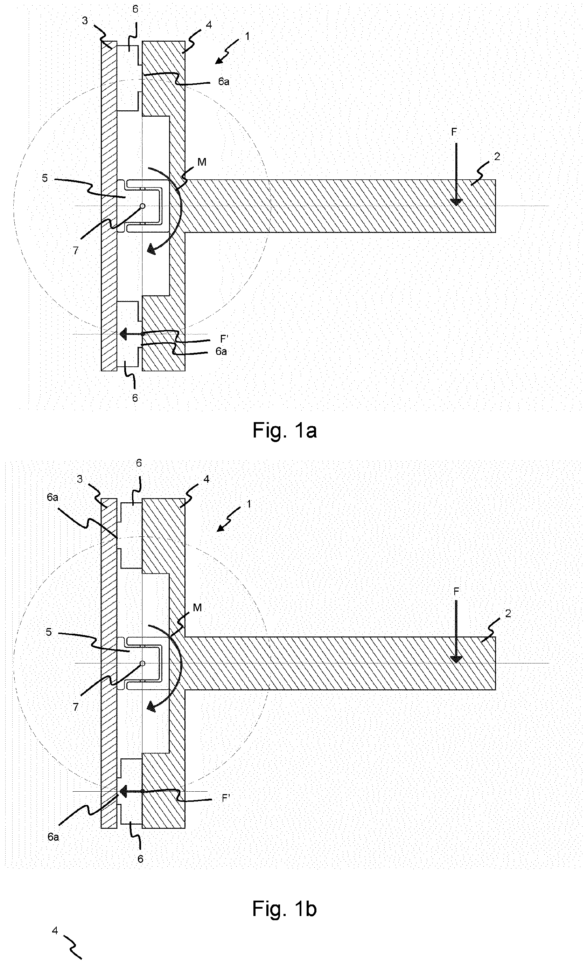

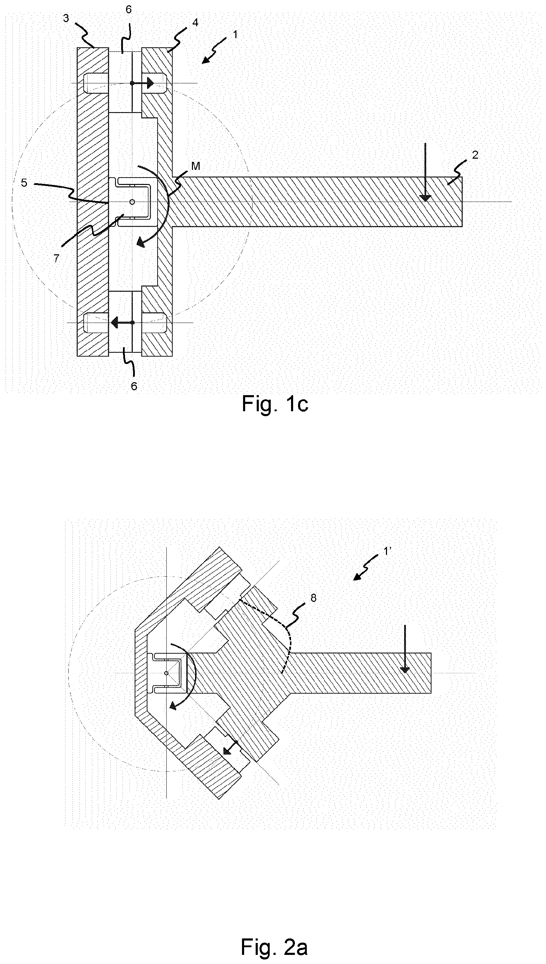

Figures 1a, 1b and 1c show a schematic cross-sectional view of a preferred embodiment of a force measuring device 1 according to the invention. The force measuring device 1 is configured for measuring both a force magnitude as well as a force direction applied to at least one body 2 which is connected to the force measuring device 1. In Figures 1a and 1b, the at least one body 2 is embodied as a shaft. The force measuring device 1 comprises a static portion 3 and a dynamic portion 4. The static portion 3 includes a connecting element 5 configured to be connected to said at least one body 2. In an inventive way, the connecting element 5 is configured to limit a movement of the at least one body 2 to a rotation around a rotation point 7 within two substantially transverse planes when the at least one body 2 is connected to the connecting element 5. Such a limitation of movement to a rotation within two substantially transverse planes, or in other words, to two degrees of freedom, can be obtained in different ways. The connecting element can preferably be a universal joint, which may also be called a U-joint, a Cardan joint, a Hooke joint or a Spicer joint, and which is shown in Figures 1a and 1b. Such a universal joint is known as a coupling to connect rigid shafts of which the longitudinal axes are under an angle with respect to each other and to transfer rotation of one shaft to the other shaft. However, in the present embodiment, there are no rotating shafts. The universal joint is configured to be fixedly connected to the at least one body 2 as well as to the static portion 3 of the force measuring device 1. The force measuring device further comprises at least two sensors 6, each of said at least two sensors 6 being configured to measure one of a tractive force and a pressure force, or both a tractive force and a pressure force. Each of said at least two sensors 6 are positioned between said static portion 3 and said dynamic portion 4 at a radial distance of said connecting element 5. The at least two sensors 6 are connected to the static portion 3 and to the dynamic portion 4 to transfer a force F exerted on the body 2 to at least one of the at least two sensors 6. When a force F is exerted on the body 2, the component of force F is transferred as a moment M via the connecting element 5 to the dynamic portion 4 as a force F' which can then be sensed by at least one of the sensors 6. The at least two sensors 6 can advantageously be fixedly attached to the static portion 3, while a sensing surface 6a of the at least two sensors 6 is preferably in engagement with the dynamic portion 4, as shown for example in Figure 1a. Alternatively, the at least two sensors 6 can for example be fixedly attached to the dynamic portion 4 while a sensing surface 6a of the at least two sensors 6 may be in engagement with the static portion 3, as shown in Figure 1b. The at least two sensors 6 can for example be pressure sensors, such as load cells, as shown in Figures 1a and 1b. When the sensors are configured to measure both tractive forces and pressure forces, as shown in Figure 1c, then a compressive force on one sensor can be sensed as a tractive force on another sensor. As a result, only half of the number of sensors may be needed to reach a similar measurement. The sensors 6 can then be attached to both the static portion 3 and the dynamic portion 4.

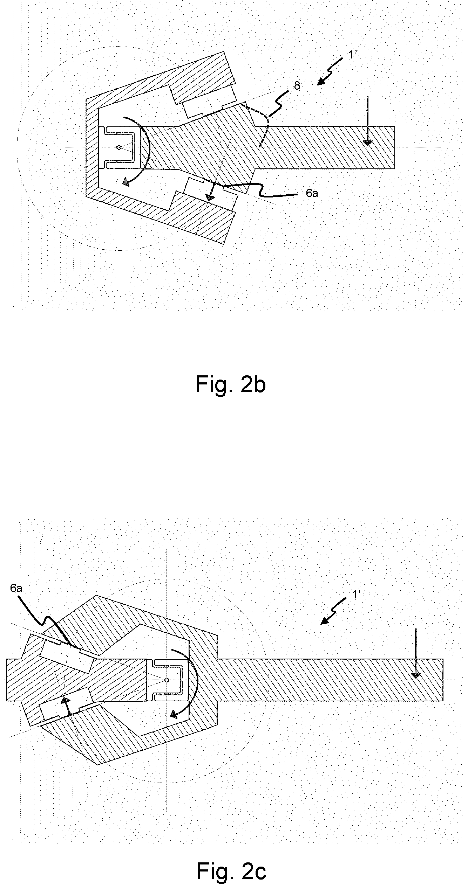

Figures 2a, 2b and 2c shows a schematic cross-sectional view on alternative embodiments of a force measuring device 1' according to the invention. All embodiments of Figures 1a, 1b, 2a, 2b and 2c have in common that a sensing surface 6a of said sensors 6 is included in one of the two substantially transverse planes to which the connecting element 5 is configured to limit a force which is exerted on the body and transferred via said connecting element 5. The main difference with the embodiments of Figure 1a and 1b is the different lever action of the shaft on the connecting element 5. The sensing surface 6a of the sensors 6 can be positioned under an angle 8 of for example 45 degrees with respect to the shaft 2 on which forces are exerted, as shown in Figure 2a, or an angle of around 20 degrees as shown in Figure 2b or 2c. In this way, the force measuring device can be relatively compact, more compact than the embodiments shown in Figures 1a or 1b. Calculations to derive a force measurement from the sensor measurements in these different cases do not change.

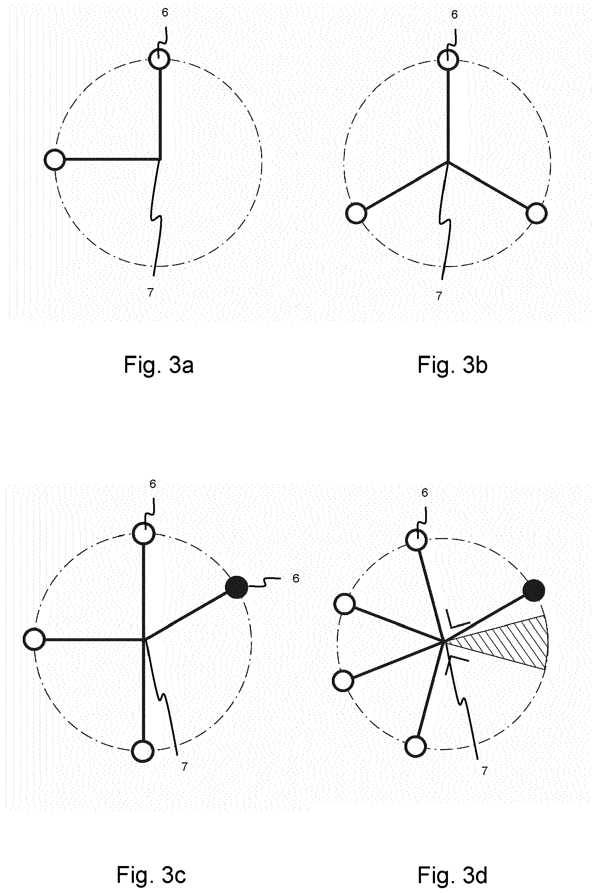

Figures 3a, 3b, 3c and 3d show schematic views of potential positions of the sensors with respect to the rotation point of the force measuring device. Sensors 6 are represented as white or black circles around the rotation point 7. In Figure 3a, two sensors are positioned such that a smallest angle between said sensors is more or less 90 degrees. If said sensors are configured to measure a tractive force and a pressure force, then this positioning will allow the sensors to sense any force or force component applied to the attached body and generating a moment in the rotation point 7 since at least one angle between the two sensors is strictly smaller than 180 degrees. The same is valid for the positioning of the sensors as shown in Figure 3b where the sensors are equally distributed including angles of 120 degrees between adjacent sensors. If the sensors are pressure sensors only, then the constellations of Figures 3a and 3b will not always provide measurements of the applied forces, depending on a direction of the applied force. In Figures 3c, four sensors have been positioned, and in Figure 3d, there are even five sensors. If these sensors are configured to measure both a tractive force and a pressure force, then both constellations will be able to measure a force direction. However, if these sensors are configured to detect pressure forces only, then for some forces, a force direction will not be detectable since in Figure 3d, an angle of more than 180° can be found in which only one sensor is present, whereas in Figure 3c, for every angle of more than 180°, the angle will always include at least two sensors, even if some sensors are positioned such that an angle between adjacent sensors exists that includes more than 90 degrees. The area where a force direction will not be detectable is indicated in Figure 3d as a hatched area.

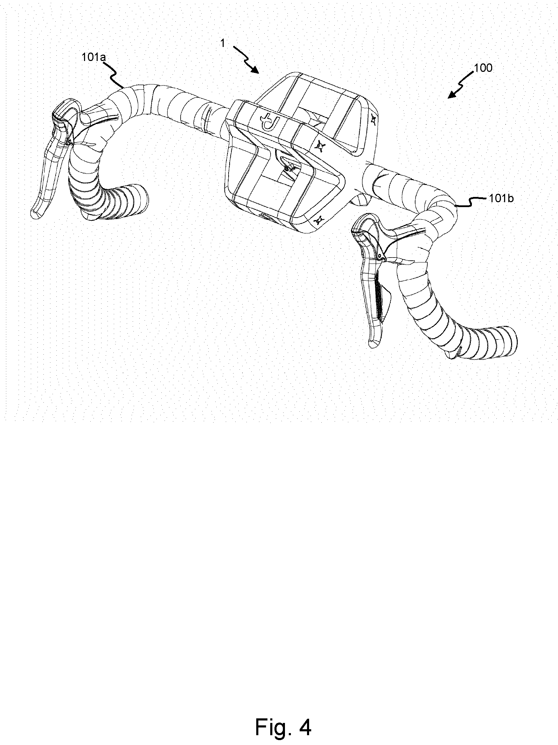

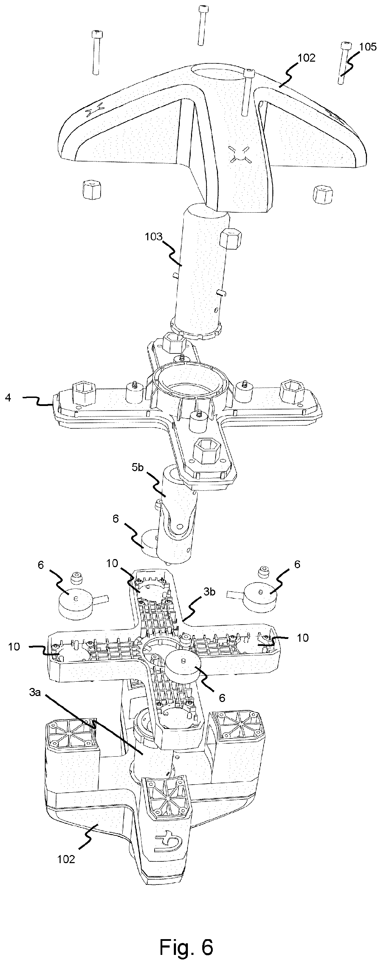

Figure 4 shows a perspective view on a preferred embodiment of a bicycle handlebar assembly 100 according to a further aspect of the invention. The bicycle handlebar assembly 100 can preferably be mountable on a stationary bicycle trainer. The bicycle handlebar assembly 100 includes a preferred embodiment of a force measuring device 1, as will be described in more detail with respect to Figure 6. The bicycle handlebar assembly 100 further includes a first handlebar portion 101a and a second handlebar portion 101b. Each of said first and second handlebar portions 101a, 101b are connected to opposing ends of the force measuring device 100. Forces exerted by a user, in particular by a cyclist on each of said first and second handlebar portions 101a, 101b can be measured separately, in particular a force magnitude and a force direction. In his way, forces exerted by a left part of the body of the cyclist can be compared to forces exerted by a right part of the body, which is in particular interesting in re-education programs, in which an unequal distribution of exerted forces may point to a lack of healing of a lesion. Similar set-ups may be developed for other types of sports or activities or test-benches, where a comparison of substantially symmetric forces exerted on a device may be of interest, as for example for rowing.

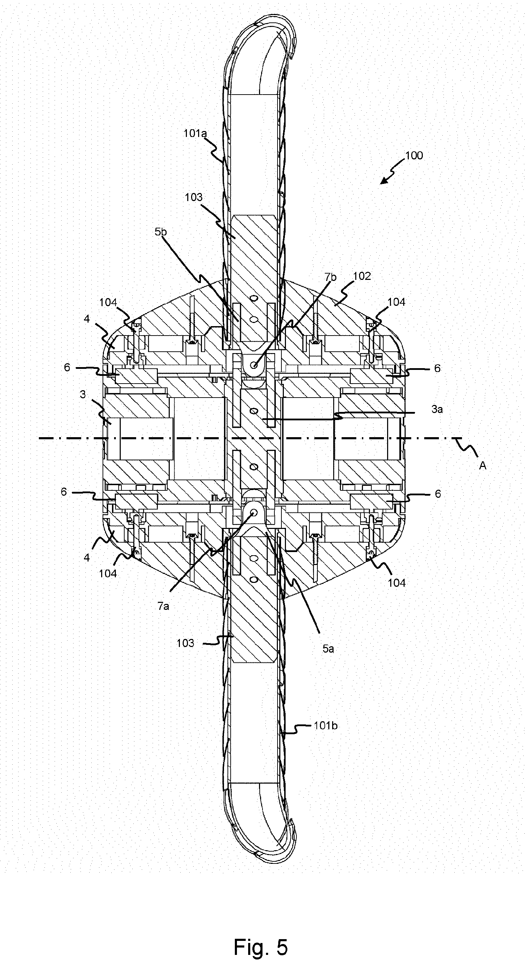

Figure 5 shows a cross-sectional top view on the bicycle handlebar assembly of Figure 4. The force measuring device 100 comprises a static portion 3 and can preferably comprise two dynamic portions 4. The static portion 3 can include a shaft 3a and two connecting elements 5a, 5b, each of said two connecting elements 5a, 5b being positioned at opposing ends of the shaft 3a. The force measuring device 100 can preferably be substantially symmetric with respect to a plane A transverse to the shaft 3a. Each of said first and second handlebar portions 101a, 101b can then be connected to the respective connecting elements 5a, 5b. The force measuring device 100 may comprise an outer shell to protect all internal functional elements and said outer shell 102 may be connected to the device via respective outer shell connectors 103. The force measuring device 100 further comprises at least four sensors 6 at a radial distance of said respective connecting elements 5a, 5b. The sensors are preferably configured to measure a pressure force which is exerted on the respective handlebar portions 101a, 101b and transferred to said sensors 6 via the respective connecting elements 5a, 5b, the static portion 3 and the respective dynamic portions 4. The respective connecting elements 5a, 5b limit the movement caused by the forces exerted on the respective handlebar portions 101a, 101b to a rotation around a respective rotation point 7a, 7b within two substantially transverse planes. The device 100 can further comprise at least one set screw 104 configured to adjust a position of the sensors 6, preferably one set screw 104 per sensor 6. The set screw can provide a preload on the respective sensor 6, which may preferably be load cells, in particular strain gauge load cells, to compensate for a play between the dynamic portion 4 and the static portion 3.

Figure 6 shows an exploded view of half of the force measuring device 1 of the bicycle handlebar assembly 100 of Figure 4, while the other half of the force measuring device 1 is assembled. The static portion 3 can include a shaft 3a, as well as at least two arms, more preferably four arms extending around and away from the respective connecting elements 5a, 5b. An angle between adjacent arms of said four arms is preferably substantially 90 degrees. These arms can be distributed differently, for example when it is expected to have forces exerted on the at least one connected body coming from a dominant direction. The sensors are preferably positioned at an end of said respective arms, at a radial distance from the respective connecting elements 5a, 5b, more preferably at equal distance of the rotation point 7. The static portion 3 may thus include a sensor holder 3b which is substantially cross-shaped. In case of two dynamic portions 4, each of said two dynamic portions being configured to be connected to opposing sides of the static portion 3, as is the case here, an end of each arm of said sensor holder 3b may include a sensor receiving space 10 configured to receive two sensors 6, one on each side of the arm such that each sensor 6 is oriented to the respective dynamic portion 4. As a result, a total of eight load cells is preferred, four for each respective dynamic portion 4 and handlebar portion 101a, 101b. Different parts of the force measuring device 100 can be fixed together using known connecting means such as for example nuts and screws 105 or any other connecting means known to the person skilled in the art.

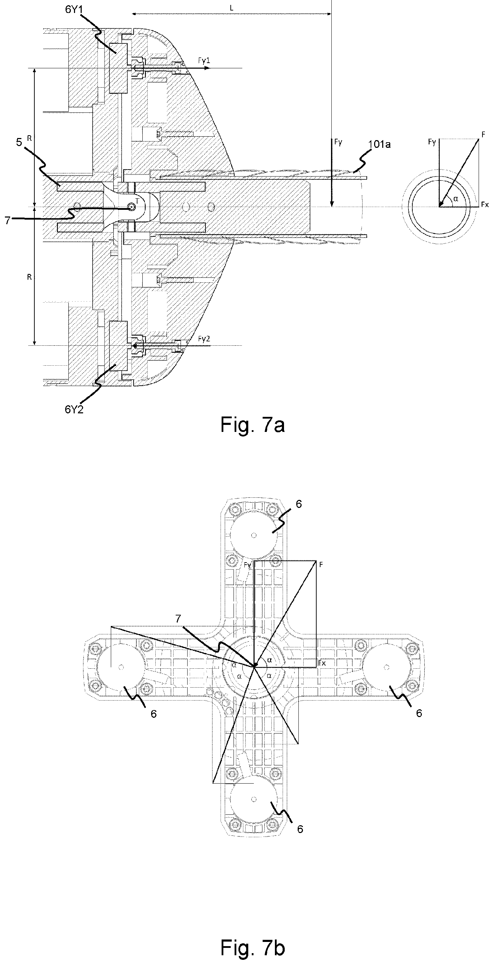

Figures 7a and 7b show two schematic cross-sectional views of the force measuring device of Figure 6. Figure 7a is a cross-section along a plane including the shaft 3a and two arms, whereas Figure 7b is a cross-section which is transverse to the shaft 3a. Thanks to the connecting element 5 embodied as a universal joint, a force F exerted on one of the handlebar portions 101a, 101b is limited to two transverse planes and can be described two-dimensionally as directed to the rotation point 7. Given the cross-shaped structure of the sensor holder 3b, the force F can be decomposed in a Cartesian coordinate system of which the X-axis and the Y-axis originate in the rotation point and correspond to a position of the sensors. The sensors can preferably be positioned at a radial distance R of the rotation point 7. The sensors can further be positioned such that a sensing surface of said sensors is included in one of the two substantially transverse planes determined by the limitation of movement due to the connecting element 5. A force F can thus be decomposed in its components $F_X$ and $F_Y$ as indicated in Figure 7b and is applied under an angle $\alpha$. Only the component $F_Y$ is visible in Figure 7a. Since the sensors, for example load cells, can be preloaded, the force $F_Y$ can be sensed by both sensors along the Y-axis. While the load $F_{Y1}$ on a first sensor $6_{Y1}$ decreases, the load $F_{Y2}$ on the second sensor $6_{Y2}$ opposite the first sensor increases. The torque T (indicated in Figure 7a) can then be determined by multiplying a difference between measurements of sensors with the radial distance R:

$$T_Y = (F_{Y1} - F_{Y2}) \cdot R$$

The Y-component of the force can then be determined by dividing the torque by the distance L between the rotation point 7 and the point of application of the force on the handlebar portion: $F_Y = {T_Y}/{L}$. This distance L can for example be derived from a touch sensor in the handlebar portion 101a or in any other known way. An analogue reasoning can be followed for determining the X-components of the torque T and the force F. The magnitude of the force F can then be determined by:

$$F = \sqrt{F_X{}^2 + F_Y{}^2}$$

A force direction can be determined by determining the angle $\alpha$: $\alpha = \cos^{-1}\frac{F_X}{F}$. In case the coordinate system is not aligned with the sensors, the formulas need to take into account a tilt angle of the coordinate system with respect to the sensors.

The force measuring device 1 may include computation means to derive a force magnitude and a force direction from the sensor measurements. Additionally, and/or alternatively, the force measuring device 1 may include communication means configured to transmit sensor measurements to remote computation means.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

**Claims**

1. Force measuring device for measuring a force magnitude and a force direction applied to at least one body, wherein the force measuring device comprises

   - a static portion including a connecting element configured to be connected to said at least one body;
   - a dynamic portion;
   - at least two sensors configured to measure a tractive force and a pressure force or at least four sensors configured to measure one of a tractive force and a pressure force, each of said sensors being positioned between said static portion and said dynamic portion at a radial distance of said connecting element,

   wherein the sensors are connected to the static portion and to the dynamic portion to transfer a force exerted on the body to at least one of the sensors; wherein the connecting element is configured to limit a movement of the at least one body to a rotation around a rotation point within two substantially transverse planes when the at least one body is connected to the connecting element.

2. Force measuring device according to claim 1, wherein the connecting element is a universal joint.

3. Force measuring device according to any of the preceding claims, wherein the sensors are positioned such that a sensing surface of said sensors is included in one of the two substantially transverse planes.

4. Force measuring device according to any of the preceding claims, wherein the sensors are positioned at equal distance of the rotation point.

5. Force measuring device according to any of the preceding claims, wherein angles between adjacent sensors are substantially equal.

6. Force measuring device according to any of the preceding claims, wherein the static portion includes at least two arms extending from said connecting element, wherein said sensors are positioned at an end of said respective at least two arms.

7. Force measuring device according to claim 6, wherein the static portion includes four arms extending from said connecting element and wherein an angle of substantially 90° is included between adjacent arms of said four arms.

8. Force measuring device according to any of the preceding claims, wherein the sensors are load cells, in particular strain gauge load cells.

9. Force measuring device according to any of the preceding claims, wherein the static portion includes a shaft and two connecting elements, each of said two connecting elements positioned at opposing ends of the shaft.

10. Force measuring device according to claim 9, wherein the force measuring device comprises two dynamic portions, each of said two dynamic portions being configured to be connected to opposing sides of the static portion.

11. Force measuring device according to any of the preceding claims 9 - 10, wherein the force measuring device is substantially symmetric with respect to a plane transverse to the shaft.

12. Force measuring device according to any of the preceding claims, wherein the device further comprises at least one set screw configured to adjust a position of the sensors.

13. Bicycle handlebar assembly, in particular for a stationary bicycle trainer, including

   - a first handlebar portion;
   - a force measuring device according to any of the preceding claims 1 - 12;

   wherein the first handlebar portion is connected to the connecting element of the static portion of the force measuring device.

14. Bicycle handlebar assembly according to claim 13, wherein the static portion includes a shaft and two connecting elements, each of said two connecting elements positioned at opposing ends of the shaft; wherein the assembly further comprises a second handlebar portion and wherein the first handlebar portion and the second handlebar portion are connected to a respective connecting element.

Fig. 1a

Fig. 1b

Fig. 1c

Fig. 2a

Fig. 2b

Fig. 2c

Fig. 3a

Fig. 3b

Fig. 3c

Fig. 3d

Fig. 4

Fig. 5

Fig. 6

Fig. 7a

Fig. 7b

Europäisches
Patentamt

European
Patent Office

Office européen
des brevets

## EUROPEAN SEARCH REPORT

**Application Number**

EP 24 15 2300

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 114 459 660 A (BEIJING RADIO MEASUREMENT TEST RES INSTITUTE) 10 May 2022 (2022-05-10) * paragraph [0055] - paragraph [0083]; figures 1-6 * | 1-8, 12-14 | INV. G01L5/16 A63B69/16 G01L5/22 |
| X | JP 2002 257655 A (NITTA KK) 11 September 2002 (2002-09-11) * paragraph [0009] - paragraph [0025]; figures 1-8 * | 1-5, 9-11,13, 14 | |
| A | US 2018/275760 A1 (NICOLET ROMAIN [CH] ET AL) 27 September 2018 (2018-09-27) * the whole document * | 6,7 | |
| A | EP 2 878 939 A2 (SEIKO EPSON CORP [JP]) 3 June 2015 (2015-06-03) * the whole document * | 10 | |
| A | FR 2 724 728 A1 (PETZKE WOLFGANG [DE]) 22 March 1996 (1996-03-22) * the whole document * | 13,14 | **TECHNICAL FIELDS SEARCHED (IPC)** G01L A63B |

The present search report has been drawn up for all claims

| Place of search | Date of completion of the search | Examiner |
|---|---|---|
| The Hague | 20 June 2024 | Gruss, Christian |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

.......................................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 15 2300

This annex lists the patent family members relating to the patent documents cited in the above-mentioned European search report.
The members are as contained in the European Patent Office EDP file on
The European Patent Office is in no way liable for these particulars which are merely given for the purpose of information.

20-06-2024

| Patent document cited in search report | | Publication date | Patent family member(s) | | Publication date |
|---|---|---|---|---|---|
| CN 114459660 | A | 10-05-2022 | NONE | | |
| JP 2002257655 | A | 11-09-2002 | NONE | | |
| US 2018275760 | A1 | 27-09-2018 | US | 2018275760 A1 | 27-09-2018 |
| | | | US | 2021255708 A1 | 19-08-2021 |
| EP 2878939 | A2 | 03-06-2015 | CN | 104614118 A | 13-05-2015 |
| | | | CN | 110057484 A | 26-07-2019 |
| | | | EP | 2878939 A2 | 03-06-2015 |
| | | | US | 2015127159 A1 | 07-05-2015 |
| | | | US | 2017282377 A1 | 05-10-2017 |
| FR 2724728 | A1 | 22-03-1996 | FR | 2724728 A1 | 22-03-1996 |
| | | | JP | H08145824 A | 07-06-1996 |

EPO FORM P0459

For more details about this annex : see Official Journal of the European Patent Office, No. 12/82